# EUROPÄISCHE PATENTSCHRIFT

(11) **EP 2 059 343 B1**
(45) Veröffentlichungstag und Bekanntmachung des Hinweises auf die Patenterteilung: **09.06.2010**
(21) Anmeldenummer: 07803384.2
(22) Anmeldetag: 10.09.2007
(51) Int. Cl.: B03C 3/28, B01D 39/06

(54) **ELEKTRETAUSRÜSTUNG**
ELECTRET FINISH
TRAITEMENT D'ÉLECTRET

(30) Priorität: 08.09.2006 DE 102006042843
(43) Veröffentlichungstag der Anmeldung: 20.05.2009
(73) Patentinhaber: Nanogate AG, 66287 Quierschied (DE)
(72) Erfinder: BENDJABALLAH, Salah, 66119 Saarbrücken (DE); KLAUSNITZER, Sylvia, 83053 Bruckmühl (DE)
(74) Vertreter: von Kreisler Selting Werner
(86) Internationale Anmeldenummer: PCT/EP2007/059481
(87) Internationale Veröffentlichungsnummer: WO 2008/028979

(56) Entgegenhaltungen:
- EP-A- 0 453 215
- GB-A- 1 541 236
- JP-A- 8 038 934
- US-A- 4 492 633

## Beschreibung

Die Erfindung betrifft eine dispergierte Elektretausrüstung, ein Verfahren zum Herstellen einer Elektretbeschichtung, die daraus resultierende Elektretbeschichtung selbst sowie die Verwendung der Elektretbeschichtung zur Ausrüstung von Textilien und Teppichböden oder zur Herstellung von Filtern, beispielsweise zur Luft- und Wasserfiltration oder in Zigarettenfiltern, Sensoren, Kondensatormikrofonen, Datenspeichern oder Membranen.

Wie der DE 10 2004 060 593 A1 entnommen werden kann, werden Elektretfilter üblicherweise so hergestellt, dass eine elektretfähige Substanz auf das Trägermaterial aufgebracht, aufgeschmolzen und in einem elektrischen Feld aufgeladen wird.

Aus der US 5,191,905 A ist ein Zigarettenfilter bekannt, in dem magnetische Fasern und Elektretfasern zum Filtern von Feinstaub genutzt werden.

US 5,162,608 A beschreibt eine Druckwalze mit einer Elektretbeschichtung, die mit einer Entwicklersubstanz, magnetische Teilchen enthaltend, in Kontakt kommt.

US 4,258,730 A beschreibt eine Ummantelung eines Zigarettenfilters, die einen Schalter mit einem Elektretkörper und einem magnetischen Körper beinhaltet, zur Verbesserung der Effizienz des Zigarettenfilters.

Auch die JP 08038934 A betrifft einen Luftfilter. Bei diesem wird eine Mischung verschiedener Pulver in einen Behälter eingefüllt. Es entsteht dadurch eine sehr geringe Kontaktfläche des Elektretmaterials mit der einströmenden Luft.

Aus der US 4 492 633 A ist eine Elektretausrüstung bekannt geworden gemäß die Merkmale des Oberbegriffs des Anspruchs 1.

Da sich nur wenige Elektretpartikel direkt an der Oberfläche des Filters befinden, kann nur ein sehr geringer Anteil der Elektretpartikel mit einer möglichst hohen Spannung aufgeladen werden. Mit dem hierin beschriebenen Material ist eine flächige Ausrüstung nicht möglich.

In den meisten dieser Ausgestaltungsformen wirken die magnetischen und die Elektretkomponenten aus unterschiedlichen Richtungen auf dieselben zu filternden Partikel. Zudem können die aus dem obengenannten Stand der Technik bekannten Elektretmaterialien, gerade wenn sie als Fasern vorliegen, üblicherweise mit einer Spannung von höchstens 500 V aufgeladen werden. Selbst bei einem langsamen Abbau der Ladung werden diese Materialien deshalb schnell wirkungslos.

Es ist also die Aufgabe der vorliegenden Erfindung, Einwirkung von magnetischem Material und Elektretmaterial aus derselben räumlichen Richtung zu ermöglichen und das Elektretmaterial mit einer möglichst hohen Spannung aufladen zu können.

Diese der Erfindung zugrundeliegende Aufgabe wird in einer ersten Ausführungsform gelöst durch eine wässrige Elektretausrüstung, die dadurch gekennzeichnet ist, dass sie ferromagnetische Teilchen in einer Menge in einem Bereich von 0,01 bis 6 Gew.% und Teilchen aus Elektretmaterial in einer Menge in einem Bereich von 0,1 bis 60 Gew.% enthält.

Hohe Gehalte an Teilchen in der erfindungsgemäßen Elektretausrüstung sind besonders zur Herstellung von Elektretmembranen geeignet.

Vorteilhafterweise enthält die erfindungsgemäße Elektretausrüstung jedoch ferromagnetische Teilchen in einer Menge in einem Bereich von 0,01 bis 1 Gew.% und Elektretmaterial in einer Menge in einem Bereich von 0,1 bis 10 Gew.%. Niedrige Gehalte an Teilchen in der erfindungsgemäßen Elektretausrüstung sind besonders für Textilausrüstungen oder zur Ausrüstung beziehungsweise Herstellung von Filtern, beispielsweise Luft- und Flüssigkeitsfiltern oder Zigarettenfiltern, Sensoren, Kondensatormikrofonen oder Datenspeichern geeignet.

Ferromagnetische Teilchen im Sinne der Erfindung sind vorteilhafterweise Teilchen mit einer magnetischen Suszeptibilität bei 25 °C von wenigstens 0,1. Unter ferromagnetischen Teilchen im Sinne der Erfindung werden darüber hinaus Teilchen verstanden, die antiferromagnetisch, oder ferromagnetisch sind, oder ferromagnetische Domains aufweisen, die zwar somit als solche für sich ferromagnetisch sind, wobei aber die magnetischen Momente der Domains unterschiedliche Richtungen aufweisen und sich somit ganz oder teilweise aufheben, so dass nach Außen hin kein oder nur ein schwächeres magnetisches Moment messbar ist. Elektretmaterial im Sinne der Erfindung ist ein Material, dass dielektrisch ist und ein permanentes elektrisches Dipolmoment aufweisen kann.

Die wässrige Ausrüstung im Sinne der Erfindung umfasst vorteilhafterweise alle Ausrüstungen, die Wasser enthalten. Vorzugsweise ist mindestens 20 Gew.% Wasser enthalten. Dabei können vorzugsweise auch oder anstelle von Wasser Lösungsmittel enthalten sein, insbesondere solange diese mit Wasser eine homogene Phase ausbilden. Hierzu zählen vorzugsweise Ether, Aceton Alkohole wie Ethanol, Methanol, Isopropanol.

Vorteilhafterweise sind übliche Additive wie Bindemittel und Dispersionshilfsmittel enthalten, besonders bevorzugt jedoch nicht mehr als zu 5 Gew.%.

Die magnetische Suszeptibilität der ferromagnetischen Teilchen beträgt vorteilhafterweise wenigstens 1 bei 25 °C. Viele Partikeln, die durch das vom Elektretmaterial aufgebaute elektrische Feld wandern, tragen eine elektrische Ladung. Wird eine elektrische Ladung bewegt, so wird neben dem elektrischen Feld ein magnetisches Feld erzeugt, welches mit dem Magnetfeld der magnetischen Pigmente wechselwirken kann. So wird beispielsweise Feinstaub durch vorhandene ferromagnetische Teilchen im Vergleich zu bekannten Filtermaterialien wesentlich effizienter abgeschieden.

Das Verhältnis von Breite zu Länge der ferromagnetischen Teilchen, das Aspektverhältnis, liegt vorzugsweise in einem Bereich von 0,5 bis 2. Dadurch weisen die ferromagnetischen Teilchen eine höhere mechanische Stabilität auf, als solche Teilchen, die eine länglichere Form haben wie beispielsweise Fasern.

Der mittlere Teilchendurchmesser der ferromagnetischen Teilchen liegt vorzugsweise in einem Bereich von 5 bis 50000 nm, insbesondere in einem Bereich von 10 bis 200 nm. Dadurch ist eine homogenere Verteilung der Teilchen in der daraus entstehenden Elektretbeschichtung und die Anwendung in geringeren Schichtdicken möglich.

Es ist besonders bevorzugt, wenn ferromagnetische Teilchen in der Elektretausrüstung in einem Bereich von 0,1 bis 0,5 Gew.-% vorhanden sind. Gleichermaßen ist es besonders bevorzugt, wenn die Teilchen aus Elektretmaterial in einem Bereich von 0,6 bis 3 Gew.-% in der Elektretausrüstung vorhanden sind.

Die erfindungsgemäße wässrige Elektretausrüstung liegt vorzugsweise als Dispersion, insbesondere als Suspension vor. Dadurch kann eine besonders gleichmäßige Verteilung der Teilchen in der resultierenden Elektretbeschichtung gewährleistet werden.

Die ferromagnetischen Teilchen bestehen vorzugsweise aus einem Material, das ausgewählt ist aus der Gruppe Eisen, Kobalt, Nickel, Fe₂O₃, Fe₃O₄, CrO₂, Bariumferrit, Gadolinium, Dysprosium, Holmium, Erbium, Terbium, Al-Ni-Co-Legierung, Sm-Co-Legierung, Nd₂Fe₁₄B, Ni-Fe-Legierung, Ni-Cu-Co-Legierung, Manganarsenid, Europiumoxid, Seltenerdenlegierung, Permalloy, Siliciumeisen, Mn-Zn-Ferrite, Supermalloy, Bariumoxid, Nd-Fe-B-Legierung oder einer Mischung derselben.

Das Elektretmaterial ist vorzugsweise anorganisch oder organisch, insbesondere ausgewählt aus der Gruppe Methylsiloxan, Fluoralkylsilan, Fluorpolyurethan, Fluorpolyacrylat, Polytetrafluorethylen, Polytetrafluorethylenpropylen, Polypropylen, Polyethylenterephthalat, Polyvinylidenfluorid, Copolymere dieser vorgenannten Polymere, Siliziumdioxid, Siliziumnitrid, Bariumtitanat oder Carnaubawachs.

Ganz besonders bevorzugt ist das Elektretmaterial Fluor-haltige oder Fluor-freie Polymere, wie beispielsweise Baygard AFF^{®} der Lanxess AG, Fluor-haltige oder Fluor-freie Acrylpolymere bzw. -copolymere, wie beispielsweise Dicrylan^{®} AC der Firma Huntsman Textile Effects, Fluor-haltige oder Fluor-freie Polyurethane, wie beispielsweise Alberdingk^{®} U2101 der Alberdingk Boley GmbH, Fluor-haltiges oder Fluor-freies Polyethylen, wie beispielsweise Permanol^{®} HDL der Dick Peters B.V. oder Fluoralkylsilane oder deren Salze, wie beispielsweise Dynasilan^{®} F8815 der Degussa AG.

Der Wassergehalt der erfindungsgemäßen wässrigen Elektretausrüstung liegt vorzugsweise in einem Bereich von 65,0 bis 99,9 Gew.-%, insbesondere bevorzugt in einem Bereich von 90,0 bis 99,8 Gew.-%. Der Feststoffgehalt liegt vorzugsweise in einem Bereich von 0,1 bis 10 Gew.-%.

In einer weiteren Ausführungsform wird die der Erfindung zugrundeliegende Aufgabe gelöst durch ein Verfahren zum Herstellen einer Elektretbeschichtung, dadurch gekennzeichnet, dass man in einem ersten Schritt die erfindungsgemäße Elektretausrüstung auf ein Substrat aufträgt und in einem nachfolgenden Schritt das Substrat zunächst trocknet und anschließend in einem elektrischen Feld auflädt.

Eine Aufladung während der Trocknung ist zumindest zu Beginn der Trocknung besonders nachteilhaft, da das Wasser eine Aufladung praktisch verhindert.

Durch das erfindungsgemäße Verfahren lassen sich im Unterschied zum Stand der Technik erstmals magnetische Komponenten und Elektretkomponenten so positionieren, dass sie im Wesentlichen aus derselben Richtung auf Partikel einwirken können. So können sich bewegende, elektrisch geladene Teilchen, welche dadurch auch ein magnetisches Moment erhalten, besonders effektiv angezogen werden, da das elektrische Feld und das magnetische Feld aus derselben Richtung einwirken können. Durch das erfindungsgemäße Verfahren lässt sich die Elektretbeschichtung mit besonders hohen Spannungen aufladen. So beträgt die Spannung vorteilhafterweise mindestens 0,5 kV, insbesondere liegt die Spannung in einem Bereich von 5 bis 1000 kV, insbesondere in einem Bereich von 10 bis 50 kV. Durch das erfindungsgemäße Verfahren wurde weiterhin überraschenderweise gefunden, dass so hergestellte Beschichtungen eine gegenüber dem Stand der Technik wesentlich verbesserte Ladungserhaltung aufweisen.

Das Substrat ist vorteilhafterweise Vlies oder Glas. Ebenso können beispielsweise Kunststoffoberflächen oder Garne behandelt werden.

Die Elektretbeschichtung wird zur Entfernung des Wassers vorzugsweise bei einer Temperatur in einem Bereich von 80 bis 200 °C, insbesondere bevorzugt in einem Bereich von 120 bis 140 °C getrocknet. Die Dauer des Trockenschrittes liegt vorzugsweise in einem Bereich von 1 bis 30 min. Insbesondere bevorzugt in einem Bereich von 5 bis 15 min.

Die erfindungsgemäße Elektretausrüstung wird vorzugsweise durch Sprühen, Tauchen, Foulard-Applikation oder Rakeln auf das Substrat aufgetragen.

In einer weiteren Ausführungsform wird die der Erfindung zugrundeliegende Aufgabe gelöst durch eine Elektretbeschichtung auf einem Substrat, dadurch gekennzeichnet, dass sie ferromagnetische Teilchen aufweist.

In der Beschichtung sind neben gegebenenfalls üblichen Additiven wie Bindemitteln, Farbstoffen oder ähnlichen Bestandteilen vorzugsweise 1 bis 20 Gew.% ferromagnetische Teilchen und vorzugsweise 80 bis 99 Gew.% Elektretmaterial enthalten.

Vorteilhafterweise wird die erfindungsgemäße Elektretbeschichtung durch das erfindungsgemäße Verfahren unter Verwendung der erfindungsgemäßen wässrigen Elektretausrüstung erhalten.

Vorzugsweise sind die ferromagnetischen Teilchen in der erfindungsgemäßen Elektretbeschichtung im Wesentlichen in das Elektretmaterial eingebettet. Eingebettet im Sinne der Erfindung sind die ferromagnetischen Teilchen dann, wenn vorteilhafterweise mindestens 80 % der Oberfläche der ferromagnetischen Teilchen, insbesondere mindestens 90 Gew.-% der ferromagnetischen Teilchen zu mindestens 80 %, insbesondere mindestens 90 % mit Elektretmaterial in direktem Kontakt stehen.

Vorzugsweise sind die Teilchen aus Elektretmaterial und die ferromagnetischen Teilchen so ausgestaltet, wie dies bereits im Rahmen der erfindungsgemäßen Elektretausrüstung beschrieben ist. Dies gilt insbesondere für die Materialien, die Aspektverhältnisse, die Teilchendurchmesser sowie die magnetische Suszeptibilität.

Die Schichtdicke der erfindungsgemäßen Elektretbeschichtung liegt vorzugsweise in einem Bereich von 0,1 bis 100 µm, insbesondere in einem Bereich von 1 bis 30 µm.

In einer weiteren Ausführungsform wird die der Erfindung zugrundeliegende Aufgabe gelöst durch die Verwendung der erfindungsgemäßen Elektretbeschichtung zur Ausrüstung von Textilien und Teppichen, oder zur Herstellung von Filtern, beispielsweise zur Luft- und Flüssigfiltration oder in Zigarettenfiltern, Sensoren, Kondensatormikrofonen, Datenspeichern oder Membranen.

### Ausführungsbeispiele:

Als Substrat wurde handelsübliches Polyester-Spinnvlies mit einem Flächengewicht von 300 g/m² und einer Dicke von 4 mm sowie einer Luftdurchlässigkeit gemäß DIN EN ISO 9237 von 1250 l/dm² x min (+/- 20 %) eingesetzt. Sofern nicht anders angegeben, waren die Polymerdispersionen etwa 50 %ig (Gew.-%) in voll entsalztem Wasser. Das Magnetpigment wurde als Pulver oder als Dispersion in der Regel entweder in der Polymerdispersion oder direkt in voll entsalztem Wasser dispergiert.

Die wässrige Elektretausrüstung wurde durch Sprühen auf das Polyester-Spinnvlies aufgebracht und anschließend bei etwa 130 °C etwa 10 min getrocknet. Nach der Trocknung befand sich das besprühte Substrat in direkter Nachbarschaft einer Aufladeelektrode R23 ATR mit einem Hochspannungsgenerator KNH 124 der Eltex Elektrostatik GmbH mit einer Spannung von 20 kV, wodurch die Oberflächenaufladung in der Beschichtung induziert werden konnte. Die Messung der Oberflächenladung erfolgte mittels eines Influenzfeldmeters KNH 34 der Eltex Elektrostatik GmbH in bestimmten Zeitabständen. Die Messung der verbesserten Filterwirkung erfolgte mittels eines Filterprüfstands der Firma Palas, wobei der Fraktionsabscheidegrad nach Palas abhängig von der Partikelgröße in µm gemessen wurde. Dabei war die Anströmgeschwindigkeit in der Regel 25 cm/sec und die Staubbeladung lag bei etwa 200 mg/cm³ SAE Feinstaub.

Es wurden folgende 11 Elektretausrüstungen entsprechend auf Vliessubstrate aufgetragen, getrocknet und im elektrischen Feld aufgeladen, wobei nötigenfalls alle Zusammensetzungen auf 100 Gew.-Teile mit vollentsalztem Wasser aufgefüllt wurden:

### Beispiel 1:

2 Gew.-Teile wässrige Fluorpolymerdispersion Baygard AFF^{®} der Lanxess AG wurden mit 0,5 Gew.-Teilen einer wässrigen Dispersion von magnetischem Eisenoxidpigment mit einer Partikelgröße von ca. 30 nm der Firma Bühler AG, Schweiz, MK 06/D12, in VE-Wasser dispergiert. Die Dispersion konnte über obiges Verfahren appliziert, die Oberfläche nach dem Trocknen wie beschrieben aufgeladen werden.

### Beispiel 2 (Vergleichsbeispiel):

0,5 Gew.-Teile einer ca. 20 %igen wässrigen Dispersion des magnetischen Eisenoxidpigments aus Beispiel 1 wurden mit VE-Wasser verdünnt und auf die Substratoberfläche aufgesprüht. Trocknung und Aufladung erfolgten wie oben beschrieben.

### Beispiel 3 (Vergleichsbeispiel):

0,5 Gew.-Teile einer ca. 20 %igen wässrigen Dispersion des nicht-magnetischen Eisenoxidpigments und mit einer Partikelgröße von ca. 30 nm der Bühler AG, Schweiz (V306 MP) wurden in VE-Wasser dispergiert und auf die Substratoberfläche aufgesprüht. Die Anhaftung ohne Bindemittel beruht auf elektrostatischer Wechselwirkung zwischen Faseroberfläche und Partikel. Trocknung und Aufladung erfolgten wie oben beschrieben.

### Beispiel 4:

2 Gew.-Teile einer wässrigen Acrylatdispersion Dycrylan AC^{®} der Huntsman Textile Effects GmbH wurden mit 0,5 Gew.-Teilen einer ca. 20 %igen wässrigen Dispersion eines mit SiO₂ ummantelten, magnetischen Eisenoxidpigments und Partikeln mit einer Größe von <1 µm der Degussa AG in VE-Wasser dispergiert. Die Dispersion konnte über obige Verfahren appliziert, die Oberfläche nach dem Trocknen wie beschrieben aufgeladen werden.

### Beispiel 5:

2 Gew.-Teile einer wässrigen Fluorpolymerdispersion Baygard AFF^{®} der Lanxess AG wurden mit 0,1 bis 0,5 Gew.-Teilen einer ca. 20 %igen wässrigen Dispersion eines global gesehen nicht-magnetischen Eisenoxidpigments, welches jedoch einzelne ferromagnetische Domänen aufweist, und Partikeln mit einer Größe von ca. 30 nm der Firma Bühler AG, Schweiz (V306MP) in VE-Wasser dispergiert. Die Dispersion konnte über obige Verfahren appliziert, die Oberfläche nach dem Trocknen wie beschrieben aufgeladen werden.

### Beispiel 6:

2 Gew.-Teile einer wässrigen Polyurethandispersion Alberdingk U 2101^{®} der Alberdingk Boley GmbH wurden mit 0,5 Gew.-Teilen einer ca. 20 %igen wässrigen Dispersion des magnetischen Eisenoxidpigments aus Beispiel 1 in VE-Wasser dispergiert. Die Dispersion konnte über obige Verfahren appliziert, die Oberfläche nach dem Trocknen wie beschrieben aufgeladen werden.

### Beispiel 7:

2 Gew.-Teile einer wässrigen Polyethylendispersion Permanol HDL^{®} der Firma Dick Peters B.V. Holland wurden mit 0,5 Gew.-Teile einer ca. 20 %igen wässrigen Dispersion des magnetischen Eisenoxidpigments in VE-Wasser und Partikeln mit einer Größe von ca. 30 nm der Firma Bühler AG, Schweiz dispergiert. Die Dispersion konnte über obige Verfahren appliziert, die Oberfläche nach dem Trocknen wie beschrieben aufgeladen werden.

### Beispiel 8:

0,5 Gew.-Teile des Fluoralkylsilans Dynasilan F 8261 der Firma Degussa AG, wurden in ca. 70 Gew.-Teilen Isopropanol gelöst und mit ca. 30 Gew.-Teilen VE-Wasser gemischt mit 0,05 Gew.-Teilen Schwefelsäure unter Rühren hydrolysiert. Als die Lösung wieder klar war, konnten 0,5 Gew.-Teile einer ca. 20 %igen wässrigen Dispersion des magnetischen Eisenoxidpigments aus Beispiel 1 zugegeben werden. Die Dispersion konnte über obige Verfahren appliziert, die Oberfläche nach dem Trocknen wie beschrieben aufgeladen werden.

### Beispiel 9:

3 Gew.-Teile des Amino-funktionellen Fluoralkylsilan (Dynasilan F 8815^{®}) wurden in VE-Wasser gelöst und mit Ameisensäure auf pH 5 eingestellt. Zu dieser Lösung konnten 0,5 Gew.-Teile einer ca. 20 %igen wässrigen Dispersion des magnetischen Eisenoxidpigments aus Beispiel 1 zugegeben werden. Die Dispersion konnte über obige Verfahren appliziert, die Oberfläche nach dem Trocknen wie beschrieben aufgeladen werden.

### Beispiel 10:

2 Gew.-Teile einer ca. 60 %igen wässrigen Emulsion von Polyhydrogenmethylsiloxan Perlit SI-SW^{®} konnte mit 0,5 Gew.-Teilen einer ca. 20 %igen wässrigen Dispersion des magnetischen Eisenoxidpigments und Partikeln mit einer Größe von ca. 30 nm der Bühler AG, Schweiz additiviert werden. Die Dispersion konnte über obige Verfahren appliziert, die Oberfläche nach dem Trocknen wie beschrieben aufgeladen werden.

### Beispiel 11:

2 Gew.-Teile einer wässrigen Fluorpolymerdispersion Baygard AFF^{®} der Lanxess AG wurden mit 0,5 Gew.-Teilen eines magnetischen Eisenoxidpigmentpulvers, Magnetpigment 346 der BASF AG, Partikelgröße <1 µm, in VE-Wasser dispergiert. Die Dispersion konnte über obige Verfahren appliziert, die Oberfläche nach dem Trocknen wie beschrieben aufgeladen werden.

### Referenzbeispiel:

2 Gew.-Teile einer wässrigen Fluorpolymerdispersion Baygard AFF^{®} der Lanxess AG wurden in VE-Wasser dispergiert. Die Dispersion konnte über obige Verfahren appliziert, die Oberfläche nach dem Trocknen wie beschrieben aufgeladen werden.

### Ladungserhaltung bei verschieden Anwendungsbeispielen (Polyester-Spinnvlies) :

| Anwendungsbeispiel | Oberflächenladung nach 2 Wochen [kV] |
|---|---|
| Unbehandelt, nicht aufgeladen | 0 |
| Unbehandelt, aufgeladen | 0,6 |
| Referenzbeispiel | 2,5 |
| Anwendungsbeispiel 1 | 7,5 |
| Anwendungsbeispiel 2 | 1,5 |
| Anwendungsbeispiel 3 | 0,1 |
| Anwendungsbeispiel 4 | 4,5 |
| Anwendungsbeispiel 5 | 14 |
| Anwendungsbeispiel 11 | 10 |

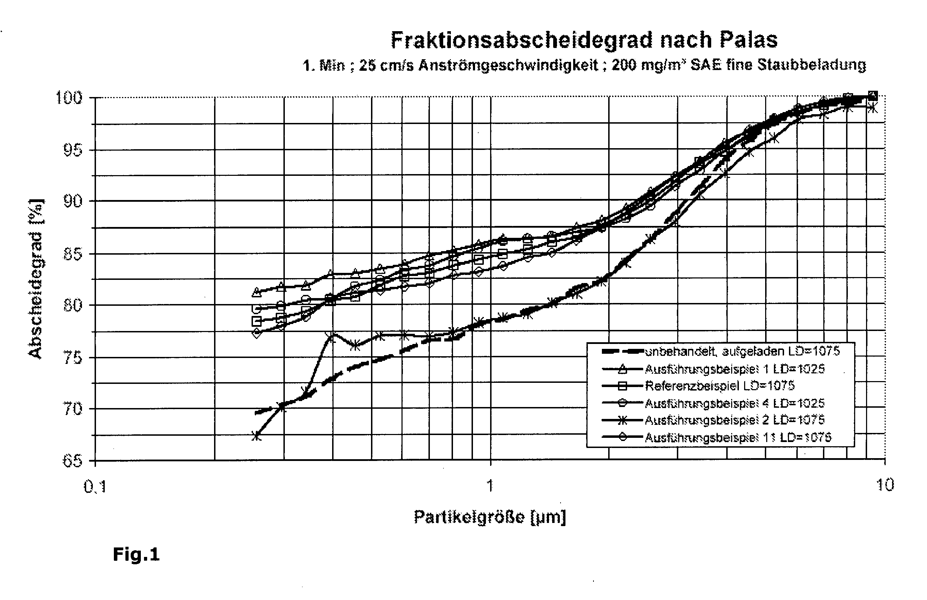

- Figur 1: zeigt den Fraktionsabscheidegrad nach Palas nach 1 min Filtrationszeit.

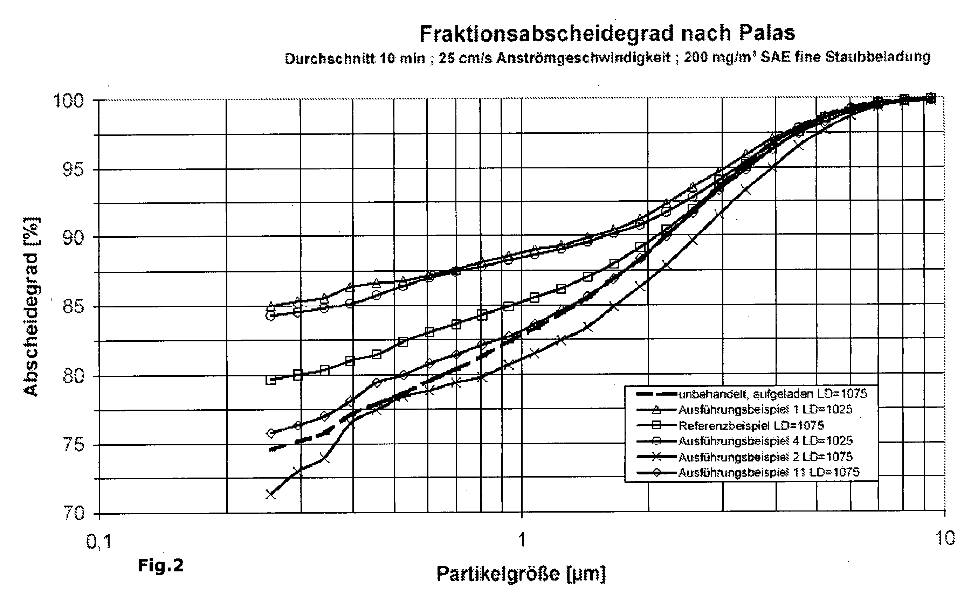

- Figur 2: zeigt den Fraktionsabscheidegrad nach Palas nach 10 min Filtrationszeit.

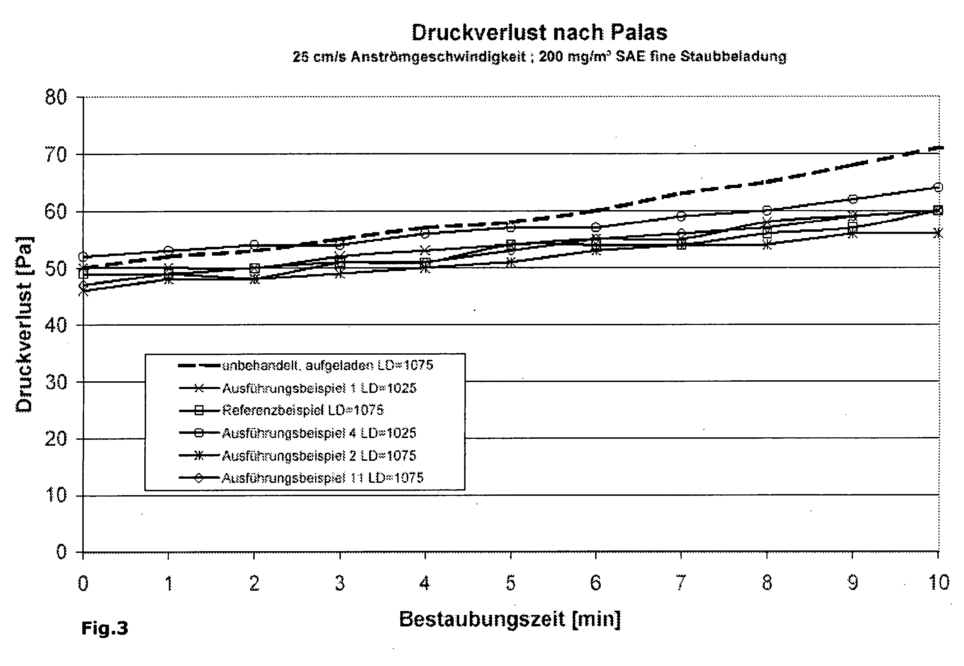

- Fig. 3: zeigt den Druckverlust in Abhängigkeit von der Bestaubungszeit.

## Patentansprüche

1. Dispergierte Elektretausrüstung, die **dadurch gekennzeichnet ist, dass** sie ferromagnetische Teilchen in einer Menge in einem Bereich von 0,01 bis 6 Gew.% und Elektretmaterial in einer Menge in einem Bereich von 0,1 bis 60 Gew.% enthält.

2. Elektretausrüstung gemäß Anspruch 1, **dadurch gekennzeichnet, dass** das Material der ferromagnetischen Teilchen eine magnetische Suszeptibilität von mindestens 0,1 bei 25 °C aufweist.

3. Elektretausrüstung gemäß Anspruch 1, **dadurch gekennzeichnet, dass** das Verhältnis von Breite zu Länge der ferromagnetischen Teilchen in einem Bereich von 0,5 bis 2 liegt.

4. Elektretausrüstung gemäß Anspruch 1, **dadurch gekennzeichnet, dass** der mittlere Teilchendurchmesser der ferromagnetischen Teilchen in einem Bereich von 5 bis 50000 nm liegt.

5. Elektretausrüstung gemäß Anspruch 1, **dadurch gekennzeichnet, dass** mindestens 20 Gew.% mehr Elektretmaterial als ferromagnetische Teilchen enthalten sind.

6. Elektretausrüstung gemäß einem der Ansprüche 1 bis 5 in Form einer wässrigen Dispersion.

7. Verfahren zum Herstellen einer Elektretbeschichtung, **dadurch gekennzeichnet, dass** man in einem ersten Schritt die Elektretausrüstung gemäß Anspruch 1 auf ein Substrat aufträgt, trocknet und in einem nachfolgenden Schritt das Substrat in einem elektrischen Feld auflädt.

8. Verfahren gemäß Anspruch 7, **dadurch gekennzeichnet, dass** man eine Spannung zum Aufbau des elektrischen Feldes in einem Bereich von 10 bis 50 kV einsetzt.

9. Elektretbeschichtung auf einem Substrat, **dadurch gekennzeichnet, dass** sie ferromagnetische Teilchen aufweist.

10. Elektretbeschichtung gemäß Anspruch 9, **dadurch gekennzeichnet, dass** die ferromagnetischen Teilchen im Wesentlichen in das Elektretmaterial eingebettet sind.

11. Verwendung der Elektretbeschichtung gemäß Anspruch 10 zur Ausrüstung von Textilien und Teppichen, oder zur Herstellung von Filtern, beispielsweise Luft- und Flüssigkeitsfiltern oder Zigarettenfiltern, Sensoren, Kondensatormikrofonen, Datenspeichern oder Membranen.

## Claims

1. A dispersed electret finish **characterized by** containing ferromagnetic particles in an amount within a range of from 0.01 to 6% by weight and electret material in an amount within a range of from 0.1 to 60% by weight.

2. The electret finish according to claim 1, **characterized in that** the material of the ferromagnetic particles has a magnetic susceptibility at 25 °C of at least 0.1.

3. The electret finish according to claim 1, **characterized in that** the ratio of width to length of the ferromagnetic particles is within a range of from 0.5 to 2.

4. The electret finish according to claim 1, **characterized in that** the mean particle diameter of the ferromagnetic particles is within a range of from 5 to 50,000 nm.

5. The electret finish according to claim 1, **characterized in that** the amount of electret material contained exceeds that of the ferromagnetic particles by at least 20% by weight.

6. The electret finish according to any of claims 1 to 5 in the form of an aqueous dispersion.

7. A process for preparing an electret coating, **characterized in that** the electret finish according to claim 1 is applied to a substrate in a first step, dried, and the substrate is charged in an electric field in a subsequent step.

8. The process according to claim 7, **characterized in that** the voltage employed for generating the electric field is within a range of from 10 to 50 kV.

9. An electret coating on a substrate, **characterized by** containing ferromagnetic particles.

10. The electret coating according to claim 9, **characterized in that** said ferromagnetic particles are essentially embedded in the electret material.

11. Use of the electret coating according to claim 10 for finishing textiles and carpets or for preparing filters, for example, air and liquid filters or cigarette filters, sensors, condenser microphones, data memories or membranes.

## Revendications

1. Traitement électret dispersé, **caractérisé en ce qu'**il contient des particules ferromagnétiques en une quantité comprise dans la plage allant de 0,01 à 6 % en poids et un matériau électret en une quantité comprise dans la plage allant de 0,1 à 60 % en poids.

2. Traitement électret selon la revendication 1, **caractérisé en ce que** le matériau des particules ferromagnétiques a une susceptibilité magnétique d'au moins 0,1 à 25 °C.

3. Traitement électret selon la revendication 1, **caractérisé en ce que** le rapport entre la largeur et la longueur des particules ferromagnétiques est compris dans la plage allant de 0,5 à 2.

4. Traitement électret selon la revendication 1, **caractérisé en ce que** le diamètre moyen des particules ferromagnétiques est compris dans la plage allant de 5 à 50000 nm.

5. Traitement électret selon la revendication 1, **caractérisé en ce que** la quantité du matériau électret est supérieure à celle des particules ferromagnétiques d'au moins 20 % en poids.

6. Traitement électret selon l'une quelconque des revendications 1 à 5 sous la forme d'une dispersion aqueuse.

7. Procédé pour préparer un revêtement d'électret, **caractérisé en ce que** le traitement électret selon la revendication 1 est appliqué sur un substrat et séché dans une première étape, et que le substrat est chargé par l'action d'un champ électrique dans une étape ultérieure.

8. Procédé selon la revendication 7, **caractérisé en ce qu'**une tension comprise dans la plage allant de 10 à 50 kV est utilisée pour établir le champ électrique.

9. Revêtement d'électret sur un substrat, **caractérisé en ce qu'**il comprend des particules ferromagnétiques.

10. Revêtement d'électret selon la revendication 9, **caractérisé en ce que** les particules ferromagnétiques sont sensiblement noyées dans le matériau électret.

11. Utilisation du revêtement d'électret selon la revendication 10 pour le traitement de textiles et de tapis, ou pour la fabrication de filtres, par exemple de filtres à air ou à liquides ou de filtres de cigarettes, de capteurs, de microphones à condensateurs, d'enregistreurs de données ou de membranes.
